# EUROPEAN PATENT APPLICATION

(11) **EP 3 534 541 A1**
(43) Date of publication of application: **04.09.2019**
(21) Application number: 17865801.9
(22) Date of filing: 18.04.2017
(51) Int. Cl.: H04B 1/10

(54) **TERMINAL RECEIVER, METHOD FOR CONTROLLING TERMINAL RECEIVER AND STORAGE MEDIUM**

(30) Priority: 28.10.2016 CN 201610971191
(71) Applicant: ZTE Corporation, Shenzhen, Guangdong 518057 (CN)
(72) Inventor: LI, Yuanyong, Shenzhen Guangdong 518057 (CN)
(74) Representative: Regimbeau
(86) International application number: PCT/CN2017/080884
(87) International publication number: WO 2018/076626

(57) **Abstract**

Disclosed are a terminal receiver, a method for controlling a terminal receiver, and a storage medium. The terminal receiver includes a receiving antenna, a receiving filter and a front-end circuit thereof, a low noise amplifier, a back-end receiving circuit, a baseband processing unit, and a low noise preamplifier having a bypass function that is disposed between the receiving antenna and the receiving filter together with the front-end circuit thereof The baseband processing unit is configured to control to enable or disable the bypass function of the low noise preamplifier under a set bypass function switching condition to make the low noise preamplifier operate in a bypass mode or in a low-noise mode. The set bypass function switching condition includes: disabling the bypass function of the low noise preamplifier in response to determining that a received signal meets a set weak signal and a low-interference standard, and enabling the bypass function of the low noise preamplifier in response to determining that the received signal meets a set strong signal or a strong-interference standard.

## Description

### CROSS-REFERENCE TO RELATED APPLICATIONS

This application is based on and claims the priority of Chinese patent application No. 201610971191.5 filed on October 28, 2016, disclosure of which is incorporated herein by reference in its entirety.

### TECHNICAL FIELD

The present invention relates to the field of mobile communications, and more particularly relates to a terminal receiver, a method for controlling a terminal receiver, and a storage medium.

### BACKGROUND

Receiving sensitivity is a key performance indicator of a mobile terminal, which represents the capability of a receiver to extract useful information from a weak signal. Various test specifications and operators have set strict specifications and test specifications for the receiving sensitivity. The higher the receiving sensitivity of a mobile terminal, the better its receiving performance in its application, so it has always been the goal for mobile terminal designers to strive to improve the receiving sensitivity.

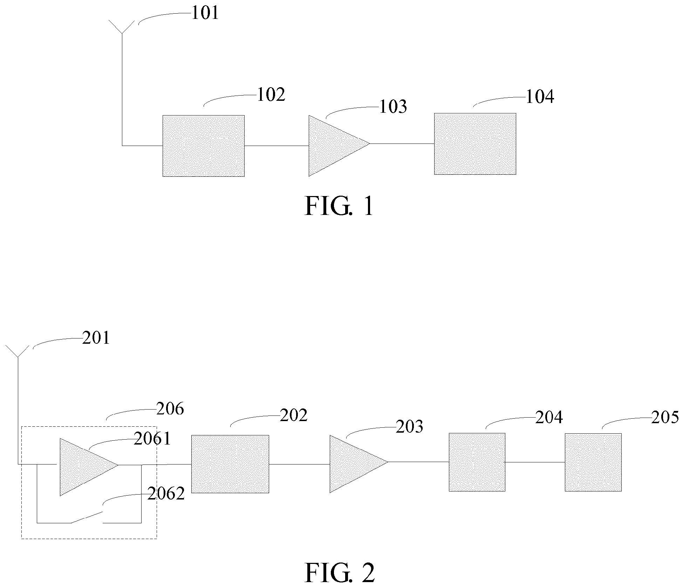

The structure of an existing receiver is shown in FIG. 1, which only shows the most basic parts of the receiver, where 101 denotes a receiving antenna, 102 denotes a receiving filter together with a front-end circuit thereof (mainly including a radio frequency (RF) switch, a receiving filter, a duplexer, etc.), 103 indicates a low noise amplifier, and 104 indicates a back-end receiving circuit (mainly including: a mixer, an ADC, etc.), and a baseband processing unit. The mobile terminal receives through the receiving antenna 101 a wireless signal that comes over by spatial coupling, filters the wireless signal and obtains the useful part through the receiving filter 102, then amplifies the useful part through the low noise amplifier 103 to reduce the influence of the subsequent receiving circuit noise on the receiving sensitivity of the whole receiver, and processes the amplified signal through the subsequent receiving circuit 104 and the baseband processing unit, finally obtaining the useful information.

In the current receiver architecture, the key indicators for achieving a high receiving sensitivity include: insertion loss of the receiving filter together with the front-end circuit thereof 102, noise figure of the low noise amplifier 103, and noise figure of the back-end receiving circuit and baseband processing unit 104. Since the influence of the noise figure of the back-end receiving circuit and baseband processing unit 104 is greatly reduced due to the existence of the gain of the low noise amplifier 103, the insertion loss of the receiving filter together with the front-end circuit thereof 102 and the noise figure of the low noise amplifier 103 need to be reduced as much as possible in order to achieve a high receiving sensitivity.

Therefore, how to reduce the insertion loss of the receiving filter together with the front-end circuit 102 and the noise figure of the low noise amplifier 103 to improve the receiving sensitivity becomes a technical problem to be solved by the present invention.

### SUMMARY

In view of the above problem, the present invention provides a terminal receiver, a method for controlling a terminal receiver, and a storage medium to solve the above problem.

According to one aspect of the present invention, a method for controlling a terminal receiver is provided. In the terminal receiver a low noise preamplifier having a bypass function is arranged adjacent to a receiving antenna. The method includes:
controlling to enable or disable the bypass function of the low noise preamplifier under a set bypass function switching condition to make the low noise preamplifier operate in a bypass mode or in a low-noise mode;
where the set bypass function switching condition includes: in response to determining that a received signal meets a set weak signal and low-interference standard, disabling the bypass function of the low noise preamplifier; and in response to determining that the received signal meets a set strong signal or a strong-interference standard, enabling the bypass function of the low noise preamplifier.

In the above solution, the low noise preamplifier having a bypass function includes a low noise amplifier and a bypass switch coupled in parallel with the low noise amplifier.

In the above solution, controlling to enable or disable the bypass function of the low noise preamplifier under the set bypass function switching condition to make the low noise preamplifier operate in the bypass mode or in the low-noise mode includes:
controlling to close or open the bypass switch to make the low noise preamplifier operate in the bypass mode or in the low-noise mode.

In the above solution, controlling to enable or disable the bypass function of the low noise preamplifier under the set bypass function switching condition includes:
in response to determining that the low noise preamplifier operates in the bypass mode and the received signal has a strength greater than or equal to a first set threshold, keeping the low noise preamplifier operating in the bypass mode; otherwise, disabling the bypass function of the low noise preamplifier to make the low noise preamplifier operate in the low-noise mode; and
in response to determining that the low nose preamplifier operates in the low noise mode and a quality of the received signal meets a set standard, keeping the low noise preamplifier operating in the low-noise mode; otherwise, enabling the bypass function of the low noise preamplifier to make the low noise preamplifier operate in the bypass mode.

In the above solution, the condition that the quality of the received signal meets the set standard includes: a difference between the quality of the received signal and a quality of the received signal in the bypass mode prior to switching to the low-noise mode is greater than a second set threshold.

According to another aspect of the present invention, a terminal receiver is provided. The terminal receiver includes a receiving antenna, a receiving filter and a front-end circuit thereof, a low noise amplifier, a back-end receiving circuit, and a baseband processing unit. The terminal receiver further includes a low noise preamplifier having a bypass function, which is disposed between the receiving antenna and the receiving filter together with the front-end circuit thereof.

The baseband processing unit is configured to control to enable or disable the bypass function of the low noise preamplifier under a set bypass function switching condition to make the low noise preamplifier operate in a bypass mode or in a low-noise mode.

The set bypass function switching condition includes: in response to determining that a received signal meets a set weak signal and low-interference standard, disabling the bypass function of the low noise preamplifier; and in response to determining that the received signal meets a set strong signal or a strong-interference standard, enabling the bypass function of the low noise preamplifier.

In the above solution, the low noise preamplifier having a bypass function includes a low noise amplifier and a bypass switch coupled in parallel with the low noise amplifier.

In the above solution, the baseband processing unit is configured to control to enable or disable the bypass switch to make the low noise preamplifier operate in the bypass mode or in the low-noise mode.

In the above solution, the baseband processing unit is configured to, in response to determining that the low noise preamplifier operates in the bypass mode and the received signal has a strength greater than or equal to a first set threshold, keep the low noise preamplifier operating in the bypass mode; otherwise, disable the bypass function of the low noise preamplifier to make the low noise preamplifier operate in the low-noise mode; and
in response to determining that the low noise preamplifier operates in the low-noise mode and a quality of the received signal meets a set standard, keep the low noise preamplifier operating in the low-noise mode; otherwise, enable the bypass function of the low noise preamplifier to make the low noise preamplifier operate in the bypass mode.

In the above solution, the condition that the quality of the received signal meets the set standard includes: a difference between the quality of the received signal and a quality of the received signal in the bypass mode prior to switching to the low-noise mode is greater than a second set threshold.

Embodiments of the present invention further provide a computer storage medium, which stores computer-executable instructions configured for executing the above method for controlling a terminal receiver.

The present invention offers the following beneficial effects.

According to the solution adopted in the embodiments of the present invention, a low noise preamplifier having a bypass function is added and arranged adjacent to a receiving antenna prior to a receiving filter, whereby the low noise preamplifier is made to operate in a low-noise amplification mode when a received signal meets a set weak signal and low-interference standard. Therefore, the influence of the insertion loss of the receiving filter together with the front-end circuit thereof and the noise figure of the original low noise amplifier on the receiving sensitivity is reduced, and so the receiving sensitivity of the receiver is improved.

The above description is merely an overview of the technical solution of the present invention. In order to better understand the technical means employed the present invention, the present invention may be implemented in accordance with the contents specification. The above and other objects, features and advantages of the present invention will be more apparent and obvious from specific embodiments of the present invention described below.

### BRIEF DESCRIPTION OF DRAWINGS

Various other advantages and benefits will become apparent to those skilled in the art through reading the detailed description of the illustrative embodiments hereinafter. The drawings are intended for the mere purpose of illustrating the exemplary embodiments and are not to be construed as limiting the present invention. Components having the same reference numerals in the drawings indicate the same components. In the drawings:
FIG. 1 is a schematic diagram of a terminal receiver in the related art; and
FIG. 2 is a schematic diagram of a terminal receiver according to a first embodiment of the present invention.

### DETAILED DESCRIPTION

Exemplary embodiments of the present invention will be described in detail with reference to the drawings. Though the drawings show some exemplary embodiments of the present invention, it should be understood that the exemplary embodiments of the present invention may be implemented in many forms and should not be construed as limiting the embodiments set forth herein. Rather, the provision of these embodiments is intended for a thorough and complete understanding of the present invention, and fully conveying the scope of the present invention to those skilled in the art.

Considering that receiving sensitivity indicators of a receiver are limited by the insertion loss of a receiving filter together with a front-end circuit thereof as well as the noise figure of a low noise amplifier, embodiments of the present invention provide a terminal receiver, a method for controlling a terminal receiver, and a storage medium. The present invention adds a first stage low noise amplifier adjacent to the receiving antenna prior to the receiving filter, so according to a system noise figure cascade formula, the influence of the insertion loss of the receiving filter together with the front-end circuit thereof and the noise figure of the original low noise amplifier maybe greatly reduced and maybe essentially neglected. Therefore, the system noise figure is determined by the noise figure of the newly added low noise preamplifier. The system noise figure will be reduced, and the receiving sensitivity of the receiver will be greatly improved. At the same time, in order to avoid the influence of strong external interference on the receiver's receiving sensitivity, a bypass mode is added to the low noise preamplifier. The bypass mode is employed in a strong signal or strong interference signal environment to save the receiver's power consumption and ensure the receiver's receiving performance.

Specifically, a first embodiment of the present invention provides a terminal receiver. As illustrated in FIG. 2, the terminal receiver includes a receiving antenna 201, a receiving filter together with a front-end circuit thereof 202, a low noise amplifier 203, a back-end receiving circuit 204, and a baseband processing unit 205. The terminal receiver further includes a low noise preamplifier 206 having a bypass function, which is disposed between the receiving antenna 201 and the receiving filter together with the front-end circuit thereof 202.

The baseband processing unit 205 is configured to control to enable or disable the bypass function of the low noise preamplifier 206 under a set bypass function switching condition to make the low noise preamplifier 206 operate in a bypass mode or in a low-noise mode.

The set bypass function switching condition includes: in response to determining that a received signal meets a set weak signal and low-interference standard, disabling the bypass function of the low noise preamplifier 206; and in response to determining that the received signal meets a set strong signal or a strong-interference standard, enabling the bypass function of the low noise preamplifier 206.

In a specific embodiment of the present invention, the low noise preamplifier 206 having a bypass function includes a low noise amplifier 2061 and a bypass switch 2062 coupled in parallel with the low noise amplifier 2061.

In this embodiment, the baseband processing unit 205 is configured to control to close or open the bypass switch 2062 to make the low noise preamplifier 206 operate in the bypass mode or in the low-noise mode.

In another specific embodiment of the present invention, the control process of the baseband processing unit 205 in the set bypass function switching condition is as follows.

In response to determining that the low noise preamplifier operates in the bypass mode and the received signal has a strength greater than or equal to a first set threshold, the low noise preamplifier is kept operating in the bypass mode; otherwise, the bypass function of the low noise preamplifier is disabled to make the low noise preamplifier operate in the low-noise mode.

In response to determining that the low noise preamplifier operates in the low-noise mode and a quality of the received signal meets a set standard, the low noise preamplifier is kept operating in the low-noise mode; otherwise, the bypass function of the low noise preamplifier is enabled to make the low noise preamplifier operate in the bypass mode.

The condition that the quality of the received signal meets the set standard includes: a difference between the quality of the received signal and a quality of the received signal in the bypass mode prior to switching to the low-noise mode is greater than a second set threshold.

In this embodiment, the quality of the received signal may be, but is not limited to, reflected by the signal-to-noise ratio.

The working process of the terminal receiver in this embodiment will be described below.
1) Initially the terminal receiver operates in the bypass mode, in which a wireless signal obtained by the receiving antenna is filtered, amplified, and down-converted, and finally is processed and computed through the baseband processing unit to obtain an antenna port received signal strength and a received signal quality thereof.
2) The received signal strength in the bypass mode is compared against a first set threshold. If the received signal strength is greater than or equal to the first set threshold, it is determined that the low noise preamplifier 206 continues operating in the bypass mode. If the received signal strength is less than the first set threshold, then the low noise preamplifier 206 enables the low noise amplifier (LNA) mode.
3) The wireless signal obtained by the receiving antenna in the LNA mode is finally processed through the baseband processing unit to obtain an antenna port received signal strength and a received signal quality thereof.
4) The received signal quality in the LNA mode is compared against a received signal quality in the bypass mode prior to switching to the LAN mode. When a difference between the received signal quality in the LNA mode and a received signal quality in the bypass mode prior to switching to the LAN mode is greater than a second set threshold, the low noise preamplifier continues operating in the LNA mode. Otherwise, it operates in the bypass mode.

Compared with FIG. 1, in the solution adopted in the embodiments of the present invention, just a low noise preamplifier having a bypass function is added adjacent to the receiving antenna and between the receiving antenna and the receiving filter together with the front-end circuit thereof. The low noise preamplifier having a bypass function serves the following main function. First, to enable its LNA mode in cases where the signal is weak and the external interference is low. Second, to use its bypass function in a working environment where the signal or the external interference is strong, to ensure the receiver performance as well as a low power consumption of the receiver. When the receiver is working, the working mode (i.e., in which function it is operating) of the low noise preamplifier maybe determined in real time according to the received signal strength and the received signal quality.

In a second embodiment of the present invention, a method for controlling a terminal receiver is provided, in the terminal receiver is disposed a low noise preamplifier having a bypass function adjacent to a receiving antenna. Specifically, the method in the embodiment includes: controlling to enable or disable the bypass function of the low noise preamplifier under a set bypass function switching condition to make the low noise preamplifier operate in a bypass mode or in a low-noise mode.

The set bypass function switching condition includes: in response to determining that a received signal meets a set weak signal and low-interference standard, enabling the bypass function of the low noise preamplifier; and in response to determining that the received signal meets a set strong signal or a strong-interference standard, enabling the bypass function of the low noise preamplifier.

In a specific embodiment of the present invention, the low noise preamplifier having a bypass function includes a low noise amplifier and a bypass switch coupled in parallel with the low noise amplifier.

The operation of controlling to enable or disable the bypass function of the low noise preamplifier under the set bypass function switching condition to make the low noise preamplifier operate in the bypass mode or in the low-noise mode includes: controlling to close or open the bypass switch to make the low noise preamplifier operate in the bypass mode or in the low-noise mode.

In another specific embodiment of the present invention, the operation of controlling to enable or disable the bypass function of the low noise preamplifier under the set bypass function switching condition includes:
in response to determining that the low noise preamplifier operates in the bypass mode and the received signal has a strength greater than or equal to a first set threshold, keeping the low noise preamplifier operating in the bypass mode; otherwise, disabling the bypass function of the low noise preamplifier to make the low noise preamplifier operate in the low-noise mode; and
in response to determining that the low noise preamplifier operates in the low-noise mode and a quality of the received signal meets a set standard, keeping the low noise preamplifier operating in the low-noise mode; otherwise, enabling the bypass function of the low noise preamplifier to make the low noise preamplifier operate in the bypass mode.

The condition that the quality of the received signal meets the set standard includes: a difference between the quality of the received signal and a quality of the received signal in the bypass mode prior to switching to the low-noise mode is greater than a second set threshold.

In this embodiment, the quality of the received signal may be, but is not limited to, reflected by the signal-to-noise ratio.

In this method of the present invention, a low noise preamplifier having a bypass function, which is adjacent to the receiving antenna and before the receiving filter, is added. The low noise preamplifier is operative to operate in a low-noise amplification mode when the received signal meets the set weak signal and low-interference standard, thereby reducing the influence of the insertion loss of the receiving filter together with the front-end circuit thereof and the noise figure of the original low noise amplifier on the receiving sensitivity, thereby improving the receiving sensitivity of the receiver.

As used herein, the term "comprising", "including" or any other variant thereof is intended to encompass a non-exclusive inclusion so that a process, method, article or apparatus that includes a series of elements not only includes the expressly listed elements but also includes other elements that are not expressly listed or are inherent to such a process, method, article or apparatus. In the absence of more restrictions, the element defined by the statement "including a ..." do not exclude the presence of additional identical elements in the process, method, article or apparatus that includes this element.

Serial numbers assigned to the foregoing embodiments of the present invention are intended for the mere purpose of ease of description and do not indicate superiority and inferiority of the embodiments.

Based on the description of the foregoing embodiments, it will be apparent to those having ordinary skill in the art that the method described in the foregoing embodiments may be implemented by software plus a necessary general-purpose hardware platform, or may of course be implemented by hardware. However, in many cases, the former may be a better implementation. Based on this understanding, the solutions provided by the present invention substantially, or the part contributing to the related art, may be embodied in the form of a software product. Computer software products may be stored in a storage medium (such as a read-only memory (ROM)/random access memory (RAM), a magnetic disk or an optical disk) and includes several instructions for enabling a terminal device (which may be a mobile phone, a computer, a server, an air-conditioner, a network device or the like) to execute the method according to each embodiment of the present invention.

Accordingly, the embodiment of the present invention further provides a computer storage medium. The computer storage medium stores computer programs configured for executing the above-mentioned method for controlling a terminal receiver provided by the embodiments of the present invention.

The foregoing merely depicts some illustrative embodiments of the present invention and are not intended to limit the scope of the present invention. Any equivalent structural or procedural changes or transformations based on the specification and drawings of the present invention, or any direct or indirect application of the present invention on any other related art shall all fall in the scope of protection of the present invention.

### INDUSTRIAL APPLICABILITY

In the embodiments of the present invention, a low noise amplifier having a bypass function is disposed adjacent to the receiving antenna in the terminal receiver. Under a set bypass function switching condition, the bypass function of the low noise preamplifier is controlled to be enabled or disabled to make the low noise preamplifier operate in a bypass mode or in a low-noise mode. The set bypass function switching condition includes: in response to determining that a received signal meets a set weak signal and low-interference standard, disabling the bypass function of the low noise preamplifier; and in response to the received signal meets a set strong signal or a strong-interference standard, enabling the bypass function of the low noise preamplifier. Therefore, the influence of the insertion loss of the receiving filter together with the front-end circuit and the noise figure of the original low noise amplifier on the receiving sensitivity may be reduced thereby effectively improving the receiving sensitivity of the receiver.

## Claims

1. A method for controlling a terminal receiver in which a low noise preamplifier having a bypass function is disposed close to a receiving antenna, the method comprising:
controlling to enable or disable the bypass function of the low noise preamplifier under a set bypass function switching condition, to make the low noise preamplifier operate in a bypass mode or in a low-noise mode;
wherein the set bypass function switching condition comprises: in response to determining that a received signal meets a set weak signal and low-interference standard, disabling the bypass function of the low noise preamplifier; and in response to determining that the received signal meets a set strong signal or a strong-interference standard, enabling the bypass function of the low noise preamplifier.

2. The method of claim 1, wherein the low noise preamplifier having a bypass function comprises a low noise amplifier and a bypass switch coupled in parallel with the low noise amplifier.

3. The method of claim 2, wherein controlling to enable or disable the bypass function of the low noise preamplifier to make the low noise preamplifier operate in the bypass mode or in the low-noise mode comprises:
controlling to close or open the bypass switch to make the low noise preamplifier operate in the bypass mode or in the low-noise mode.

4. The method of claim 1, 2 or 3, wherein controlling to enable or disable the bypass function of the low noise preamplifier under the set bypass function switching condition comprises:
in response to determining that the low noise preamplifier operates in the bypass mode and the received signal has a strength greater than or equal to a first set threshold, keeping the low noise preamplifier operating in the bypass mode; otherwise, disabling the bypass function of the low noise preamplifier to make the low noise preamplifier operate in the low-noise mode; and
in response to determining that the low noise preamplifier operates in the low-noise mode and a quality of the received signal meets a set standard, keeping the low noise preamplifier operating in the low-noise mode; otherwise, enabling the bypass function of the low noise preamplifier to make the low noise preamplifier operate in the bypass mode.

5. The method of claim 4, wherein the condition that the quality of the received signal meets the set standard comprises: a difference between the quality of the received signal and a quality of the received signal in the bypass mode prior to switching to the low-noise mode is greater than a second set threshold.

6. A terminal receiver, comprising: a receiving antenna, a receiving filter with a front-end circuit of the receiving filter, a low noise amplifier, a back-end receiving circuit, and a baseband processing unit, the terminal receiver further comprising a low noise preamplifier having a bypass function which is disposed between the receiving antenna and the receiving filter with the front-end circuit of the receiving filter;
wherein the baseband processing unit is configured to control to enable or disable the bypass function of the low noise preamplifier under a set bypass function switching condition, to make the low noise preamplifier operate in a bypass mode or in a low-noise mode;
wherein the set bypass function switching condition comprises: in response to determining that a received signal meets a set weak signal and low-interference standard, disabling the bypass function of the low noise preamplifier; and in response to determining that the received signal meets a set strong signal or a strong-interference standard, enabling the bypass function of the low noise preamplifier.

7. The terminal receiver of claim 6, wherein the low noise preamplifier having a bypass function comprises: a low noise amplifier and a bypass switch coupled in parallel with the low noise amplifier.

8. The terminal receiver of claim 7, wherein the baseband processing unit is configured to control to close or open the bypass switch to make the low noise preamplifier operate in the bypass mode or in the low-noise mode.

9. The terminal receiver of claim 6, 7 or 8, wherein the baseband processing unit is configured to:
in response to determining that the low noise preamplifier operates in the bypass mode and the received signal has a strength greater than or equal to a first set threshold, keep the low noise preamplifier operating in the bypass mode; otherwise, disable the bypass function of the low noise preamplifier to make the low noise preamplifier operate in the low-noise mode; and
in response to determining that the low noise preamplifier operates in the low-noise mode and a quality of the received signal meets a set standard, keep the low noise preamplifier operating in the low-noise mode; otherwise, enable the bypass function of the low noise preamplifier to make the low noise preamplifier operate in the bypass mode.

10. The terminal receiver of claim 9, wherein the condition that the quality of the received signal meets the set standard comprises:
a difference between the quality of the received signal and a quality of the received signal in the bypass mode prior to switching to the low-noise mode is greater than a second set threshold.

11. A computer storage medium, which stores computer-executable instructions for executing the method for controlling the terminal receiver according to any one of claims 1 to 5.
